Europäisches Patentamt

European Patent Office

Office européen des brevets

(11) Veröffentlichungsnummer: **0 394 688**

**A1**

(12) **EUROPÄISCHE PATENTANMELDUNG**

(21) Anmeldenummer: 90105869.3

(22) Anmeldetag: 28.03.90

(51) Int. Cl.⁵: **B60G 11/27, B60G 9/00**

(30) Priorität: 26.04.89 DE 3913697

(43) Veröffentlichungstag der Anmeldung:
31.10.90 Patentblatt 90/44

(84) Benannte Vertragsstaaten:
**AT BE DE ES FR GB IT NL SE**

(71) Anmelder: **Bergische Achsenfabrik Fr. Kotz & Söhne**
**Am Ohlerhammer**
**D-5276 Wiehl 1(DE)**

(72) Erfinder: **Steiner, Helmut, Ing.**
**Freiherr-vom-Stein-Strasse 1**
**D-5276 Wiehl(DE)**

(74) Vertreter: **Patentanwälte Dipl.-Ing. Alex Stenger Dipl.-Ing. Wolfram Watzke Dipl.-Ing. Heinz J. Ring**
**Kaiser-Friedrich-Ring 70**
**D-4000 Düsseldorf 11(DE)**

(54) **Achsaggregat.**

(57) Gegenstand der Erfindung ist ein Achsaggregat für Fahrzeuganhänger mit wenigstens einer starren Führungsachse (20) und einer dahinter angeordneten Nachlauflenkachse (1), bei der die Räder (4) mit Lenkhebeln (5) an einem starren Achskörper (2) angelenkt sind und durch eine Spurstange (6) miteinander in Verbindung stehen, und bei dem die Achskörper der Führungsachse (20) und der Nachlauflenkachse (1) mit Lenkerfedern an fahrgestellfesten Konsolen (10) und Luftfederbälgen (11) abgestützt sind. Damit die Nachlauflenkachse (1) die gleichen Anschlußmaße an den Längsträgern (14) hat wie die starre Führungsachse (20) wird vorgeschlagen, daß die Lenkerfedern (8) der Nachlauflenkachse (1) zwischen den vorderen Konsolen (10) und dem Achskörper (2) zur Achsmitte hin um ein Maß abgekröpft sind, welches maximal der Hälfte der Differenz zwischen den Federmittenabständen (a,b) der starren Führungsachse (20) und der Nachlauflenkachse (1) entspricht.

Fig.1

## Achsaggregat

Gegenstand der Erfindung ist ein Achsaggregat für Fahrzeuganhänger mit wenigstens einer starren Führungsachse und einer dahinter angeordneten Nachlauflenkachse, bei der die Räder mit Lenkhebeln an einem starren Achskörper angelenkt sind und durch eine Spurstange miteinander in Verbindung stehen, und bei dem die Achskörper der Führungsachse und der Nachlauflenkachse mit Lenkerfedern an fahrgestellfesten Konsolen und Luftfederbälgen abgestützt sind.

Aus der DE-PS 18 10 261 ist eine Nachlauflenkachse für Fahrzeuganhänger bekannt. Derartige Nachlauflenkachsen werden regelmäßig mit einer starren Führungsachse zu einem Doppelachsaggregat oder auch mit zwei starren Führungsachsen zu einem Dreiachsaggregat kombiniert. Die Nachlauflenkachse dient dazu, das Spurverhalten des Fahrzeuganhängers bei Kurvenfahrten zu verbessern.

Bei Doppel- oder Dreiachsaggregaten mit einer Nachlauflenkachse entsteht durch die unterschiedlichen Federmittenabstände der starren Führungsachse und der Nachlauflenkachse ein Montageproblem. Der Abstand der Längsträger des Fahrzeuganhängers entspricht nämlich dem Federmittenabstand der starren Führungsachse, damit die Konsolen, Lenkerfedern und Luftfederbälge an jeder Fahrzeugseite in der senkrechten Ebene der Fahrzeuglängsträger angeordnet werden können. Bei der Nachlauflenkachse ist das nicht möglich, weil zwischen den Rädern , die natürlich die gleiche Spurweite wie die Räder der starren Führungsachse haben, noch die Lenkhebel liegen und auch die Luftfederbälge nach innen versetzt angeordnet werden müssen, damit die Räder einschlagen können. Bei den bekannten Achsaggregaten mit einer Nachlauflenkachse wird dieses Montageproblem dadurch gelöst, daß die vorderen Konsolen für die Lenkerfeder der Nachlauflenkachse nicht in der Ebene und unmittelbar unter den Längsträgern des Fahrzeuganhängers befestigt werden, sondern um das halbe Maß der Differenz zwischen den Federmittenabständen nach innen versetzt neben der Ebene der Fahrzeuglängsträger. Der Abstand oder Versatz zwischen den Längsträgern und den Konsolen wird mit Hilfskonstruktionen überdrückt, welche einerseits an den Längsträgern und andererseits mit den Konsolen verschweißt und/oder verschraubt werden. Diese Hilfskonstruktionen erfordern nicht nur einen erhöhten Einbau- und Montageaufwand, sondern unterliegen aus statischen Gründen auch einer besonderen Beanspruchung und stellen deshalb eine Schwachstelle dar.

Davon ausgehend liegt der Erfindung die **Aufgabe** zugrunde, ein Achsaggregat mit wenigstens einer starren Führungsachse und einer Nachlauflenkachse zu schaffen, welches trotz verschiedener Federmittenabstände beider Achsen die gleichen Anschlußmaße an den Längsträgern des Fahrzeuganhängers hat.

Als technische **Lösung** werden für die Nachlauflenkachse Lenkerfedern vorgeschlagen, die zwischen den vorderen Konsolen und dem Achskörper zur Achsmitte hin um ein Maß abgekröpft sind, welches maximal der Hälfte der Differenz zwischen den Federmittenabständen beider Achsen entspricht.

Bei einem nach dieser technischen Lehr ausgebildeten Achsaggregate wird der Abstand zwischen den Mittellinien der Längs träger bzw. der darunter befestigten vorderen Konsolen und der Mittellinien von am Achskörper der Nachlauflenkachse befestigten Achslappen mit den erfindungsgemäß geformten Lenkerfedern überbrückt, die sich auf den Achslappen abstützen. Damit ist der **Vorteil** verbunden, daß die Nachlauflenkachse die gleichen Anschlußmaße an den Längsträgern des Fahrzeuganhängers hat wie die davorliegenden starren Führungsachsen. Die vorderen Konsolen der Nachlauflenkachse können ebenfalls senkrecht unter den Längsträgern ·des Fahrzeuganhängers befestigt werden. Am rückwärtigen Ende wird der Abstand zwischen den Lenkerfedern und den Längsträgern des Fahrzeuganhängers in bekannter Weise mit den Luftfederbälgen bzw. ihren Anschlußplatten überbrückt. Bei den Lenkerfedern handelt es sich um ein Teil, welches bei entsprechender Dimensionierung ohne weiteres in der Lage ist, die im statischen und dynamischen Fahrbetrieb auftretenden Belastungen und Momente aufzunehmen und von der Achse in den Fahrzeugrahmen abzuleiten. Damit leistet die Erfindung einen erheblichen Beitrag zur Sicherheit im Straßenverkehr.

Weitere Einzelheiten und Vorteile ergeben sich aus der nachfolgenden Beschreibung der zugehörigen Zeichnungen, in denen ein bevorzugtes Ausführungsbeispiel eines erfindungsgemäß ausgebildeten Achsaggregates schematisch dargestellt worden ist. In der Zeichnung zeigen:

Fig. 1 eine Nachlauflenkachse in Draufsicht;

Fig. 2 dieselbe Nachlauflenkachse entlang der Linie II-II in der Fig. 1 geschnitten in Seitenansicht;

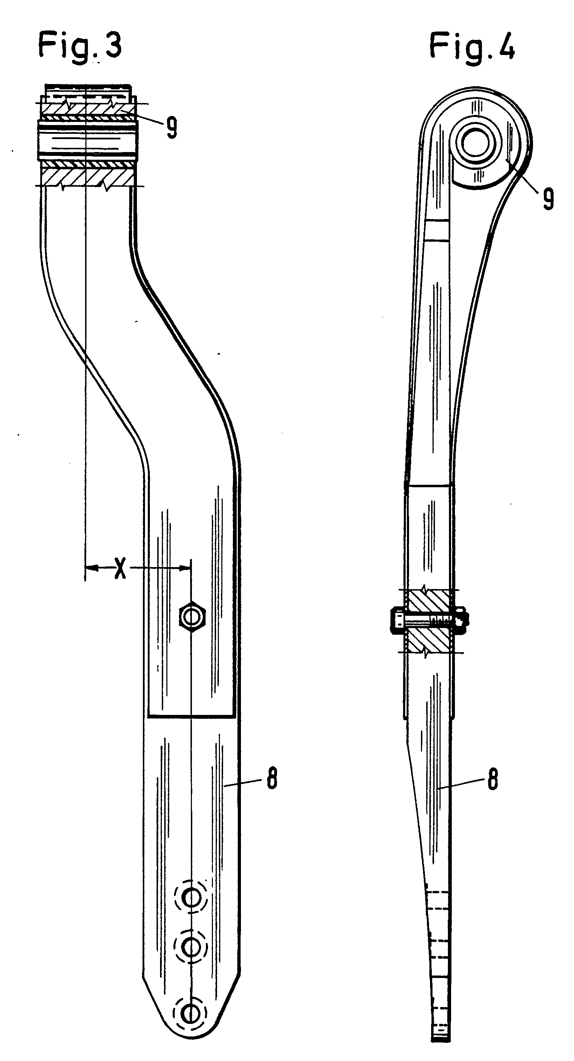

Fig. 3 eine abgekröpfte Lenkerfeder in Draufsicht;

Fig. 4 dieselbe Lenkerfeder in Seitenansicht;

Fig. 5 einen BO-Kraftkreis mit Sattelzügen, deren Sattelanhänger Dreiachsaggregate mit einer Nachlauflenkachse haben.

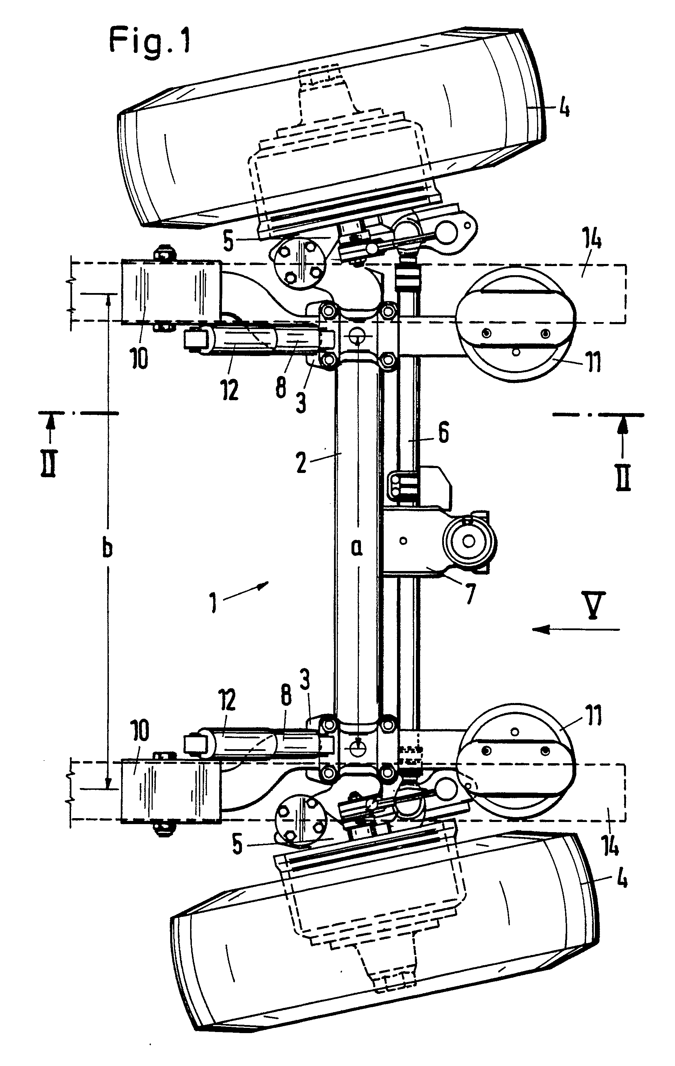

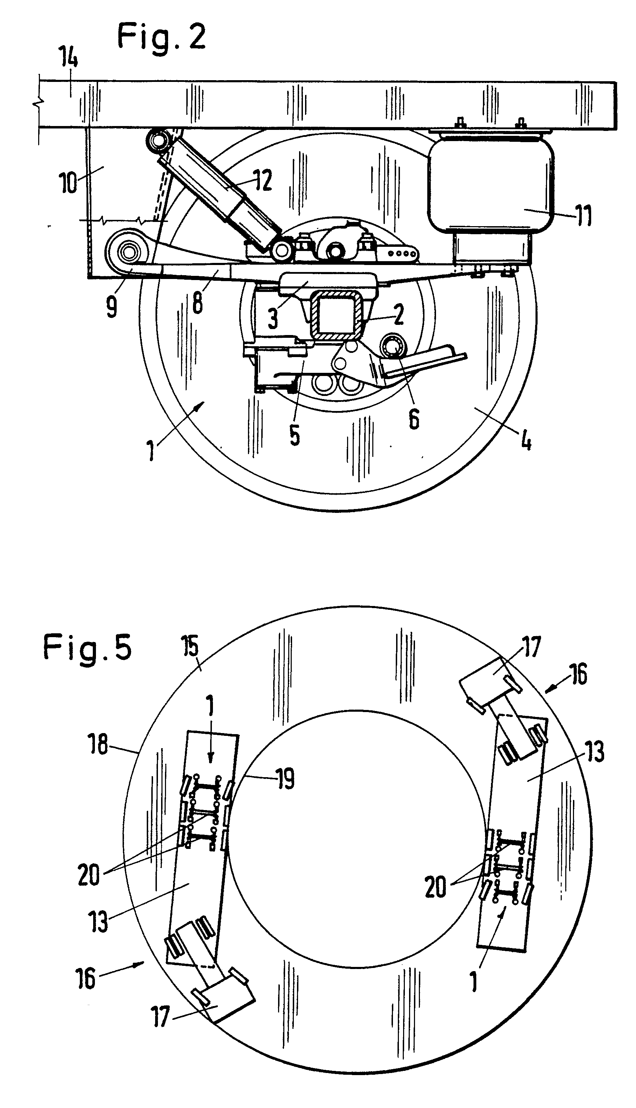

Eine in den Fig. 1 und 2 dargestellte Nachlauflenkachse 1 hat einen Achskörper 2 mit Achslappen 3, Räder 4, die mit Lenkhebeln 5 am Achskörper 2 angelenkt sind, und eine die Lenkhebel 5 miteinander verbindende Spurstange 6. Zwischen der Spurstange 6 und dem Achskörper 2 ist eine Stabilisierungsvorrichtung 7 angeordnet.

Auf den Achslappen 3 sind Lenkerfedern 8 befestigt, deren vorderes Ende in Vorwärtsfahrtrichtung V gesehen mit einem Federauge 9 an einer Konsole 10 angelenkt ist und deren hinteres Ende mit dem Topf eines Luftfederbalges 11 verbunden ist. Zwischen dem Achskörper 2 und der Konsole 10 sind Stoßdämpfer 12 angeordnet.

Bei der Montage der Nachlauflenkachse 1 unter einem Fahrzeuganhänger 13 werden die Konsolen 10 und die Luftfederbälge 11 unter Längsträgern 14 befestigt. Dabei ergibt sich zwischen dem Mittenabstand a für Achslappen 3 am Achskörper 2 bzw. die Lenkerfedern 8 am Achskörper 2 und dem Mittenabstand b der Längsträger 14 bzw. der Konsolen 10 ein Differenzmaß x, weil zwischen den Rädern 4 und den Achslappen 3 für die Federlenker 8 noch die Lenkhebel 5 angeordnet werden müssen. Der Versatz zwischen den Achslappen 3 und den Konsolen 10 wird mit den Lenkerfedern 8 überbrückt, die zu diesem Zweck zwischen den Achslappen 3 und den Konsolen 10 um das Differenzmaß x nach innen hin abgekröpft sind, welches der Hälfte der Differenz zwischen den Federmittenabständen b und a einerseits der Führungsachse 20 und andererseits der Nachlauflenkachse 1 entspricht.

In der Fig. 5 ist ein BO-Kraftkreis 15 mit zwei eingezeichneten Sattelzügen 16 dargestellt. Während die Zugmaschinen am Außenkreis 18 entlang fahren, der einen Durchmesser von maximal 12 m haben darf, spurt das Achsaggregat des Fahrzeuganhängers 13 auf den Innenkreis 19 ein, der einen Durchmesser von minimal 5,3 m haben darf. Um das Spurverhalten des Fahrzeuganhängers 13 zu verbessern, besteht dessen Achsaggregat aus zwei starren Führungsachsen 20 und einer dahinter angeordneten Nachlauflenkachse 1. Aus der Draufsicht im BO-Kraftkreis 15 ist erkennbar, daß der Federmittenabstand der beiden Führungsachsen 20 größer ist als der Federmittenabstand der Nachlauflenkachse 1. Die Längsträger 14 des Fahrzeuganhängers 13 verlaufen in der Fluchtlinie der Konsolen und Federlenker der beiden Führungsachsen 20. Daraus ergibt sich das Montage- und Einbauproblem für die Nachlauflenkachse 1, welches mit der vorliegenden Erfindung optimal gelöst wird.

**Bezugszeichenliste**

1 Nachlauflenkachse

2 Achskörper
3 Achslappen
4 Rad
5 Lenkhebel
6 Spurstange
7 Stabilisierungsvorrichtung
8 Lenkerfeder
9 Federauge
10 Konsole
11 Luftfederbalg
12 Stoßdämpfer
13 Fahrzeuganhänger
14 Längsträger
15 BO-Kraftkreis
16 Sattelzug
17 Zugmaschine
18 Außenkreis
19 Innenkreis
20 Führungsachse
V Vorwärtsfahrtrichtung
a Mittenabstand
b Mittenabstand
x Differenzmaß

**Ansprüche**

Achsaggregat für Fahrzeuganhänger mit wenigstens einer starren Führungsachse (20) und einer dahinter angeordneten Nachlauflenkachse (1), bei der die Räder (4) mit Lenkhebeln (5) an einem starren Achskörper (2) angelenkt sind und durch eine Spurstange (6) miteinander in Verbindung stehen, und bei dem die Achskörper der Führungsachse (20) und der Nachlauflenkachse (1) mit Lenkerfedern an fahrgestellfesten Konsolen (10) und Luftfederbälgen (11) abgestützt sind,
**dadurch gekennzeichnet,**
daß die Lenkerfedern (8) der Nachlauflenkachse (1) zwischen den vorderen Konsolen (10) und dem Achskörper (2) zur Achsmitte hin um ein Maß x abgekröpft sind, welches maximal der Hälfte der Differenz zwischen den Federmittenabständen (b,a) der Führungsachse (20) und der Nachlauflenkachse (1) entspricht.

# Fig.1

# Fig. 2

# Fig. 5

## Fig.3

## Fig.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| P,X | DE-U-8911790 (FELDBINDER&BECKMANN) <br> * das ganze Dokument * <br> --- | 1 | B60G11/27 <br> B60G9/00 |
| Y | DE-U-6934235 (SPITZER) <br> * Seite 5, Absatz 3 - Seite 6, Absatz 1; Figuren 1-5 * <br> --- | 1 | |
| Y | DE-A-1959496 (DAIMLER BENZ) <br> * Seite 4, Absatz 3 - Seite 5, Absatz 1; Figuren 1, 2 * <br> --- | 1 | |
| A | FR-A-2597800 (DIEBOLT) <br> * das ganze Dokument * <br> --- | 1 | |
| A | US-A-3241854 (HAMILTON) <br> ----- | | |
| | | | **RECHERCHIERTE SACHGEBIETE (Int. Cl.5 )** <br><br> B60G <br> B62D |

Der vorliegende Recherchenbericht wurde für alle Patentansprüche erstellt

| Recherchenort | Abschlußdatum der Recherche | Prüfer |
|---|---|---|
| DEN HAAG | 01 AUGUST 1990 | ESPEEL R. |